# EUROPÄISCHE PATENTANMELDUNG

(11) **EP 3 270 248 A1**
(43) Veröffentlichungstag der Anmeldung: **17.01.2018**
(21) Anmeldenummer: 16179282.5
(22) Anmeldetag: 13.07.2016
(51) Int. Cl.: G05B 23/02

(54) **VERWALTUNG VON SYSTEMALARMEN AUF BEDIEN- UND/ODER BEOBACHTUNGSGERÄTEN**

(71) Anmelder: Siemens Aktiengesellschaft, 80333 München (DE)
(72) Erfinder: Jandl, Klaus, 7000 Eisenstadt (AT); Kneidinger, Christian, 4201 Eidenberg (AT); Langguth, Karlheinz, 90766 Fürth (DE); Trausmuth, Robert, 2821 Lanzenkirchen (AT)

(57) **Zusammenfassung**

Die Erfindung betrifft ein Verfahren, das es ermöglicht Systemalarme (SYSALf1, ... SYSALfn) effizient und ressourcenschonend auf einem Bedien- und/oder Beobachtungsgerät (HMI), zu verwalten und zur Verfügung zu stellen. Das Bedien- und/oder Beobachtungsgerät (HMI) weist dazu eine Konfiguration (CONFIG), die zumindest auf dem Bedien- und/oder Beobachtungsgerät (HMI) aktive Funktionen (f1, ..., fn) umfasst und eine Systemalarmkonfiguration (SALCON), die die auf dem Bedien- und/oder Beobachtungsgerät (HMI) zur Verfügung stehenden Systemalarme (SYSALf1, ... SYSALfn) umfasst, auf. Es wird ein Verfahren vorgeschlagen,
umfassend die Schritte:
- Ermitteln der Konfiguration (CONFIG) des Bedien-und/oder Beobachtungsgeräts (HMI),
- Prüfen ob sich die Konfiguration (CONFIG) des Bedien-und/oder Beobachtungsgeräts (HMI) geändert hat und
- Anpassen der Systemalarmkonfiguration (SALCON) des Bedien- und/oder Beobachtungsgeräts (HMI), wenn sich die aktiven Funktionen (f1, ..., fn) in der Konfiguration (CONFIG) des Bedien- und/oder Beobachtungsgeräts (HMI) geändert haben.

## Beschreibung

Die Erfindung betrifft ein Verfahren zur Verwaltung von Systemalarmen auf Bedien- und/oder Beobachtungsgeräten. Die Erfindung betrifft weiter ein Bedien- und/oder Beobachtungsgerät sowie eine übergeordnetes Konfigurationssystem zur Durchführung des Verfahrens.

Ein derartiges Verfahren kommt beispielsweise in der industriellen Automatisierungstechnik und Prozessautomatisierung zum Einsatz. Dort werden Bedien- und/oder Beobachtungsgeräte zur Steuerung und/oder zur Beobachtung automatisierter Prozesse eingesetzt. Bedien- und/oder Beobachtungsgeräte werden oft auch als Human-Machine-Interfaces (HMI bzw. HMI-Geräte) bezeichnet. Bedien- und/oder Beobachtungsgeräte werden vor ihrem Einsatz programmiert und konfiguriert, wobei auch ein Systemalarmhaushalt, also die Menge der auf dem Gerät zur Verfügung stehenden Alarme, definiert werden muss. Auch eine Konfiguration bzw. Konfigurationsänderungen während des Betriebs sind denkbar. Der Systemalarmhaushalt besteht aus einer Menge von Systemalarmen. Systemalarme stehen dabei stellvertretend für einen oder mehrere bestimmte Anlagen-, Betriebs- oder Gerätezustände. Oftmals werden Systemalarme zum Zwecke der Signalisierung von abnormen Zuständen im Sinne von Warnungen oder Fehlern generiert.

Systemalarme, die durch das Automatisierungssystem und dessen Bestandteile und Funktionalitäten vorgegeben sind, können bisher beispielsweise für beliebige Funktionalitäten im Bedien- und/oder Beobachtungsgerät vorgehalten werden.

In der Regel muss ein Benutzer solche Systemalarme nicht definieren, sie sind systemgegeben oder funktionsabhängig und werden bei Erreichen bestimmter Zustände (Auslöser für Systemalarme sind ebenfalls vom System vorgegeben), ausgelöst. Beispiele für Systemalarme sind:
Systemalarm 1:
   Abbruch der Verbindung vom HMI Gerät zur Steuerung und
Systemalarm 2:
   Überlauf des Variablenarchivs.

Prinzipiell gilt, dass eine Funktion des Bedien- und/oder Beobachtungsgerät keine Systemalarme haben muss, aber eine beliebige Anzahl von Systemalarmen aufweisen kann.

Der Erfindung liegt die Aufgabe zugrunde, ein Verfahren zur Verfügung zu stellen, das es ermöglicht, Systemalarme effizient und ressourcenschonend zu verwalten und zur Verfügung zu stellen. Des Weiteren ist es Aufgabe der vorliegenden Erfindung, ein Bedien- und/oder Beobachtungsgerät sowie ein übergeordnetes Konfigurationssystem zur Durchführung des Verfahrens zur Verfügung zu stellen.

Diese Aufgabe wird durch ein Verfahren mit den in Anspruch 1 angegebenen Merkmalen gelöst.

Erfindungsgemäß wird dazu ein Verfahren zur Verwaltung von Systemalarmen auf einem Bedien- und/oder Beobachtungsgerät vorgeschlagen, wobei das Bedien- und/oder Beobachtungsgerät aufweist:
- eine Konfiguration, die zumindest auf dem Bedien- und/oder Beobachtungsgerät aktive Funktionen umfasst und
- eine Systemalarmkonfiguration, die die auf dem Bedien- und/oder Beobachtungsgerät zur Verfügung stehenden Systemalarme umfasst,
umfassend die Schritte:
- Ermitteln der Konfiguration des Bedien- und/oder Beobachtungsgeräts,
- Prüfen ob sich die Konfiguration des Bedien- und/oder Beobachtungsgeräts geändert hat und
- Anpassen der Systemalarmkonfiguration des Bedien- und/oder Beobachtungsgeräts, wenn sich die aktiven Funktionen in der Konfiguration des Bedien- und/oder Beobachtungsgeräts geändert haben.

Der Erfindung liegt die Erkenntnis zugrunde, dass mit steigender Flexibilität von Bedien- und/oder Beobachtungsgeräten und der damit einhergehenden flexiblen Konfigurierbarkeit von Funktionen der Bedien- und/oder Beobachtungsgeräte ein erhebliches Optimierungspotenzial bei der Verwaltung von Systemalarmen vorhanden ist. Auf diese Weise müssen nicht alle möglichen Systemalarme für alle möglichen Funktionen des HMI-Geräts vorgehalten werden. Insbesondere bei HMI-Geräten mit kleinem Speicherausbau ist das erfindungsgemäße Verfahren von großem Vorteil. Auch bei Bedien- und/oder Beobachtungsgeräten mit einem ausreichend dimensionierten Speicher ist das erfindungsgemäße Verfahren von Vorteil, da so kein unnötiger Speicherplatz belegt wird und mehr Ressourcen für andere und komplexere Verfahren freigegeben werden.

Der Verfahrensschritt des Ermittelns der Konfiguration ist dabei nicht zwangsläufig als ein aktives Ermitteln der Konfiguration zu sehen, sondern kann ebenso als ein einfaches Auslesen einer Konfigurationsdatei ausgestaltet sein. Das Ermitteln kann dabei sowohl von Bedien- und/oder Beobachtungsgeräten für sie selbst und/oder benachbarte Bedien- und/oder Beobachtungsgeräte als auch von übergeordneten Konfigurationssystemen durchgeführt werden. Wenn ein System bzw. Gerät für ein anderes die Ermittlung durchführt, so geschieht dies in der Regel über eine Kommunikationsverbindung, beispielsweise über eine Schnittstelle. Diese Schnittstelle kann als LAN / WLAN / USB oder jegliche weitere Schnittstellen ausgestaltet sein.

Ähnliches gilt für den Schritt des Prüfens, ob sich die Konfiguration geändert hat. Hier ist es denkbar, dass eine neue Konfiguration mit der bestehenden Konfiguration verglichen wird, von einer übergeordneten Instanz, von dem Bedien- und/oder Beobachtungsgerät für sich selbst und/oder für ein weiteres Bedien- und/oder Beobachtungsgerät. Weiterhin ist denkbar, dass durch Anpassungsbefehle bereits feststeht, dass sich die Konfiguration geändert hat. Jegliche Verfahren, die zu einem Zeitpunkt feststellen, dass eine neue Konfiguration vorliegt, fallen somit unter den Schritt des Prüfens.

Das Anpassen der Systemalarmkonfiguration wird dann durchgeführt, wenn sich auch die auf dem Bedien- und/oder Beobachtungsgerät zur Verfügung stehenden Funktionen, also die auf dem Gerät aktiven Funktionen, geändert haben. Dies ist besonders effizient und kann ressourcenschonend durchgeführt werden.

In einer besonders vorteilhaften Ausführungsform bewirkt ein übergeordnetes Konfigurationssystem eine Anpassung der Systemalarme des Bedien- und/oder Beobachtungsgeräts. Dies ist besonders vorteilhaft, da so das Bedien- und/oder Beobachtungsgerät nicht selbst eine Anpassung bewirken muss. Beispielsweise kann das übergeordnete Konfigurationssystem die Systemalarmkonfiguration direkt im Bedien- und/oder Beobachtungsgerät anpassen. Das Ermitteln der Konfiguration und die Prüfung ob sich die Konfiguration geändert hat kann, wie eingangs erwähnt, durch das Bedien- und/oder Beobachtungsgerät selbst, oder durch das übergeordnete Konfigurationssystem durchgeführt werden. Auch eine dritte Instanz, z.B. aus der Cloud, ist hier denkbar.

In einer weiteren Ausführungsform sendet ein übergeordnetes Konfigurationssystem zur Anpassung der Systemalarmkonfiguration des Bedien- und/oder Beobachtungsgeräts ein Deltapaket an das Bedien- und/oder Beobachtungsgerät. Dieses Deltapaket hat den besonderen Vorteil, dass auch wirklich nur das Delta, also die Differenz, der den neuen Funktionen zugeordneten Systemalarme übertragen werden muss. Das Deltapaket kann dabei beispielsweise als eine Datei ausgebildet sein, in der neue Funktionen bzw. Systemalarme aufgelistet sind und wegfallende Funktionen entsprechend markiert sind. Auch die Funktionen bzw. Systemalarme selbst können sich im Deltapaket als Bibliotheken oder andere Strukturen befinden. Auch die Löschanforderungen für nicht mehr benutzte Funktionen und deren Systemalarme können bereits übertragen werden. Es ist denkbar, dass in einem Deltapaket sowohl neue Funktionen als auch deren Systemalarme übertragen werden.

In einem weiteren vorteilhaften Verfahren passt das Bedien- und/oder Beobachtungsgerät seine eigene Systemalarmkonfiguration mittels eines Deltapakets selbst an. Dies ist besonders dann vorteilhaft, wenn viele Bedien- und/oder Beobachtungsgeräte anzupassen sind und somit ein übergeordnetes Konfigurationssystem zur Abarbeitung aller Anpassungen, im Gegensatz zur Abarbeitung der Anpassungen durch jedes einzelne Bedien- und/oder Beobachtungsgerät, eine längere Zeit benötigen würde. Es ist ebenso denkbar, dass je nach Einsatz verschiedener Bedien- und/oder Beobachtungsgeräte einige der Bedien- und/ oder Beobachtungsgeräte die Anpassungen selbst durchführen und wiederum andere Bedien- und/oder Beobachtungsgeräte zentral angepasst werden.

In einer weiteren Ausführungsform werden im Bedien- und/oder Beobachtungsgerät anstehende Systemalarme gelöscht, deren korrespondierende Funktionen kein Teil der Konfiguration des Bedien- und/oder Beobachtungsgeräts mehr sind. Anstehende Systemalarme sind dabei Alarme, die aktuell aktiviert sind, deren Auslösebedingungen also zumindest kurzzeitig erfüllt war. Wird nun die entsprechende Funktion des Bedien- und/oder Beobachtungsgeräts entfernt und werden die anstehenden Systemalarme nicht gelöscht, so kann der anstehende Systemalarm, je nach dessen Ausprägung, niemals gelöscht werden, da das löschende Signal durch die wegfallende Funktion nicht mehr ausgelöst werden kann. Der besondere Vorteil liegt also darin, dass mit Entfernen von Funktionen auch dessen aktuell anstehende Systemalarme gelöscht werden.

In einer weiteren Ausführungsform können für Bedien- und/oder Beobachtungsgeräte Systemalarme definiert werden, die resistent gegenüber Löschbefehlen sind. Derartige Löschbefehle können beispielsweise direkt von einem übergeordneten Konfigurationssystem kommen oder in einem Deltapaket verpackt sein. Der Vorteil von resistenten Systemalarmen liegt in der Möglichkeit, besonders kritische Alarme als nicht löschbar zu gestalten. So ist es nicht möglich, durch einfaches Entfernen der Funktion einen potenziell kritischen Alarm einfach zu löschen. Es ist denkbar, dass die Resistenz gegenüber Löschbefehlen erst mit dem Anstehen eines Alarms (wenn dieser ausgelöst wurde) aktiviert wird. So wird verhindert, dass anstehende Alarme gelöscht werden. Es ist denkbar, dass die Resistenz gegenüber Löschbefehlen durch eine Schreibschutzinformation im Alarm selbst hinterlegt wird.

Es ist ebenso denkbar, dass ein übergeordnetes Bedien- und/ oder Beobachtungsgerät existiert, das stellvertretend für untergeordnete Bedien- und/oder Beobachtungsgeräte Konfigurationen und/oder Systemalarmkonfigurationen entgegennimmt und weitere Bedien- und/oder Beobachtungsgerät konfiguriert.

In einer weiteren vorteilhaften Ausführungsform passt das Bedien- und/oder Beobachtungsgerät selbsttätig die Systemalarme anhand seiner Funktionalitäten an. Dies ermöglicht ein autarkes Betreiben von Bedien- und/oder Beobachtungsgeräten, die sich beispielsweise selbst mit den nötigen Informationen aus der Cloud versorgen.

Die Aufgabe wird ferner gelöst durch ein Bedien- und/oder Beobachtungsgerät zur Durchführung eines erfindungsgemäßen Verfahrens, aufweisend mindestens einen Speicher zur Speicherung einer Konfiguration und einer Systemalarmkonfiguration und eine Schnittstelle, wobei die Konfiguration zumindest auf dem Bedien- und/oder Beobachtungsgerät aktive Funktionen umfasst und wobei die Systemalarmkonfiguration zumindest auf dem Bedien- und/oder Beobachtungsgerät zur Verfügung stehende Systemalarme umfasst und wobei die Schnittstelle zumindest zum Ermitteln, Prüfen und/oder Anpassen der Systemalarmkonfiguration ausgebildet ist. Der Speicher des Bedien- und/oder Beobachtungsgeräts muss dabei nicht unbedingt ein einziger physikalischer Speicher sein, sondern es können je nach Anforderungen an den Speicher bezüglich Flüchtigkeit und Redundanz auch mehrere Speicher vorgesehen sein. Insbesondere bei der Speicherung der Systemalarme können sich hier höhere Anforderungen ergeben und so ist es möglich, nicht nur einen einzigen elektronischen Speicher zu verwenden, sondern je nach Bedarf auch mehrere physikalische Speicher mit unterschiedlichen Speichereigenschaften zu verwenden. Hierbei ist beispielsweise entscheidend, ob der Systemalarm einen Neustart des Systems überleben soll oder ob dieser durch einen Neustart allein durch seinen Speicherort wieder zurückgesetzt werden soll. Die Schnittstelle kann dabei eine LAN, USB, ETHERNET, WLAN, Feldbus, oder weitere Schnittstelle sein. Dabei ist denkbar, dass die Schnittstelle selbst zumindest eine begrenzte Intelligenz aufweist, um beispielsweise die Schritte Ermitteln und/oder Prüfen selbst durchzuführen und die Ergebnisse bereitzustellen. Dieses Bereitstellen kann beispielsweise ein einfacher Zugriff auf die Konfigurationsdateien des Bedien- und/oder Beobachtungsgeräts in einem Netzwerk sein.

In einer weiteren Ausführungsform eines Bedien- und/oder Beobachtungsgeräts weist dieses eine Ausführungseinheit auf, die zumindest zum Anpassen der Systemalarmkonfiguration ausgebildet ist. Auf diese Art und Weise kann das Bedien- und/oder Beobachtungsgerät selbst seine Systemalarmkonfiguration anpassen. Dies kann auf Anweisung eines übergeordneten Konfigurationssystems geschehen oder auch komplett selbsttätig.

Die Aufgabe wird weiterhin gelöst durch ein übergeordnetes Konfigurationssystem, das zur Durchführung eines erfindungsgemäßen Verfahrens ausgebildet ist und mindestens eine Schnittstelle zur Kommunikation mit einem Bedien- und/oder Beobachtungsgerät sowie mindestens einen Speicher zum zumindest temporären Speichern von Funktionen und Systemalarmen aufweist. Das übergeordnete Konfigurationssystem kann dabei vorteilhafterweise selbst alle möglichen Funktionen und alle möglichen dazu passenden Systemalarme vorhalten. Alternativ ist es auch möglich, dass das übergeordnete Konfigurationssystem sich die notwendigen Funktionen und Systemalarme aus einem wiederum darüber gelagerten System herunterlädt. Dies ist beispielsweise möglich bei einem cloudbasierten System, wo die Funktionen aus einer Cloud, bwz. von einem weit entfernten Server, heruntergeladen werden und sich das übergeordnete Konfigurationssystem beispielsweise in einem lokalen Netzwerk bei dem Bedien- und/oder Beobachtungsgerät befindet.

In einer weiteren Ausführungsform eines übergeordneten Konfigurationssystems ist dieses zur Anpassung von Systemalarmen eines Bedien- und/oder Beobachtungsgeräts über die Schnittstellte ausgebildet. Dies ermöglicht es, ein direktes als auch ein indirektes Anpassen der Systemalarme eines Bedien- und/oder Beobachtungsgeräts über beispielsweise eine Netzwerkverbindung oder eine direkte lokale USB-Verbindung zu ermöglichen. Die Veranlassung die Systemalarme anzupassen kann das übergeordnete Konfigurationssystem durch eigenständiges Ermitteln und Prüfen der aktuellen Konfiguration der Bedien- und/oder Beobachtungsgeräte erhalten. Weiterhin kann auch ein direkter Anpassungsbefehl an das übergeordnete Konfigurationssystem direkt von einem Bedien- und/oder Beobachtungsgerät oder von einer weiteren Stelle gesendet werden.

Im Folgenden wird die Erfindung anhand der in den Figuren dargestellten Ausführungsbeispiele näher beschrieben und erläutert. Es zeigen:
- FIG 1: eine mögliche Ausführungsform eines Systems zur Durchführung eines Verfahrens zur Verwaltung von Systemalarmen,
- FIG 2-4: mögliche Ausführungsformen von Bedien- und/oder Beobachtungsgeräten und
- FIG 5: ein mögliches Schema des Verfahrens zur Verwaltung von Systemalarmen.

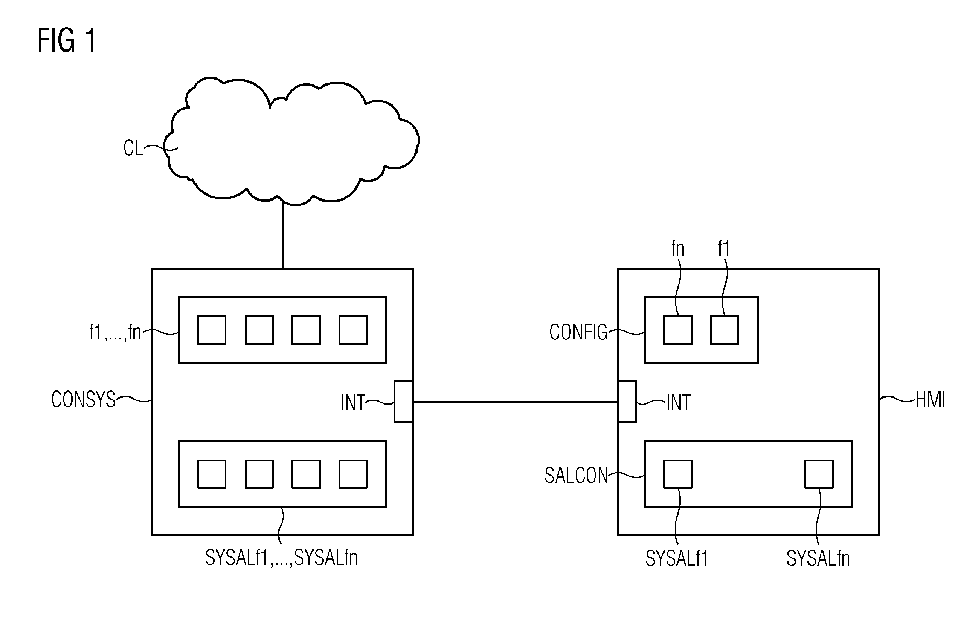

FIG 1 zeigt eine mögliche Ausführungsform eines Systems zur Durchführung eines Verfahrens zur Verwaltung von Systemalarmen SYSALf1, ..., SYSALfn auf einem Bedien- und/oder Beobachtungsgerät HMI. Zu sehen ist ein Bedien- und/oder Beobachtungsgerät HMI, das eine Konfiguration CONFIG sowie eine Systemalarmkonfiguration SALCON aufweist. Die Konfiguration CONFIG definiert, welche Funktionalitäten bzw. Funktionen f1, ..., fn im Bedien- und/oder Beobachtungsgerät HMI aktuell aktiviert sind. Diese Funktionen f1, ..., fn sind in der Konfiguration CONFIG hinterlegt. Die in FIG 1 gezeigten Bausteine sind dabei schematisch zu sehen und zeigen noch keine physikalischen Bausteine. Die Systemalarmkonfiguration SALCON des Bedien- und/oder Beobachtungsgeräts HMI definiert die zu den Funktionen f1, ..., fn gehörigen Systemalarme SYSALf1, ..., SYSALfn. In der vorliegenden FIG 1 sind aktuell die Funktionen f1, fn sowie die dazu gehörigen Systemalarme SYSALf1 und SYSALfn aktiviert. Das Bedien- und/oder Beobachtungsgerät HMI weist des Weiteren eine Schnittestelle INT zur Kommunikation mit einem übergeordneten Konfigurationssystem CONSYS auf. Auch das übergeordnete Konfigurationssystem CONSYS weist eine Schnittstelle INT sowie eine Menge von Funktionen f1, ..., fn sowie eine Menge von Systemalarmen SYSALf1, ..., SYSALfn auf. Das übergeordnete Konfigurationssystem CONSYS besitzt also die Möglichkeit, mehr Funktionen zur Verfügung zu stellen als regelmäßig auf einem Bedien- und/oder Beobachtungsgerät HMI genutzt werden. Angedeutet ist des Weiteren eine Verbindung des übergeordneten Konfigurationssystems CONSYS mit einer Cloud CL, aus der beispielsweise aktualisierte Funktionen f1, ..., fn und Systemalarme SYSALf1, ..., SYSALfn bzw. komplett neue Funktionen f1, ..., fn und Systemalarme SYSALf1, ..., SYSALfn bezogen werden können.

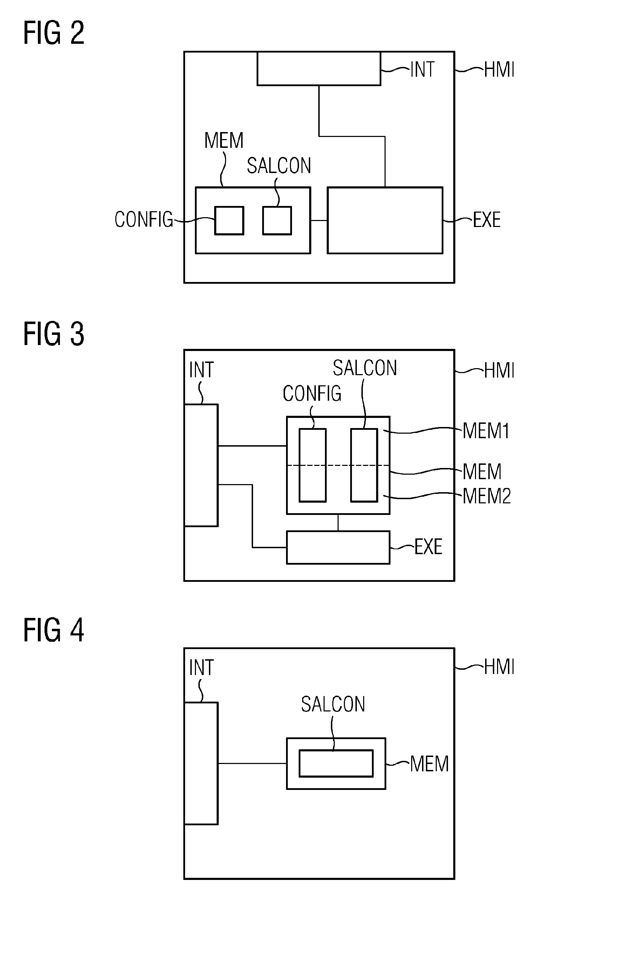

FIG 2 zeigt ein mögliches Bedien- und/oder Beobachtungsgerät HMI in einer schematischen Darstellung seiner physikalischen Komponenten. Das Bedien- und/oder Beobachtungsgerät HMI weist hierbei eine Ausführungseinheit EXE, einen Speicher MEM sowie eine Schnittstelle INT auf. Die Schnittstelle INT ist mit der Ausführungseinheit EXE verbunden, die wiederum mit dem Speicher MEM verbunden ist. Im Speicher MEM befindet sich die Konfiguration CONFIG des Bedien- und/oder Beobachtungsgeräts sowie die Systemalarmkonfigurationen SALCON des Bedien- und/oder Beobachtungsgeräts HMI. In dieser Ausgestaltung wäre es beispielsweise möglich, dass über die Schnittstelle INT eine neue Konfiguration CONFIG auf das Bedien- und/oder Beobachtungsgerät geladen wird. Die Ausführungseinheit EXE bearbeitet diese dann und speichert sie im Speicher MEM ab. Nun wäre es denkbar, dass die Ausführungseinheit EXE selbst registriert, dass sich die Konfiguration CONFIG, z.B. gegenüber einer bestehenden Konfiguration CONFIG, geändert hat und über die Schnittstelle INT auch eine neue Systemalarmkonfiguration SALCON anfordert. Alternativ ist ebenso denkbar, dass bereits über die Schnittstelle INT eine neue Systemalarmkonfiguration SALCON zur Verarbeitung durch die Ausführungseinheit EXE mitgeliefert wird.

FIG 3 zeigt eine weitere Ausgestaltung eines Bedien- und/oder Beobachtungsgeräts HMI unter Verwendung der Bezugszeichen aus FIG 2. Zusätzlich ist zu sehen, dass der Speicher MEM in einen ersten Speicher MEM1 und einen zweiten Speicher MEM2 aufgeteilt ist. Diese Aufteilung des Speichers MEM kann beispielsweise bedeuten, dass es sich um einen nicht flüchtigen und einen flüchtigen Teil des Speichers handelt. Es ist aber ebenso denkbar, dass es sich hierbei um verschiedene Speichertypen handelt, deren Resistenz gegenüber äußeren Einflüssen unterschiedlich hoch ist. Hier wären beispielsweise eine herkömmliche Festplatte und ein SSD-Speicher zu nennen. Im vorliegenden Fall ist angedeutet, dass sich die Konfiguration CONFIG und die Systemalarmkonfiguration SALCON über beide Speicher MEM1, MEM2 erstrecken. Dies kann z.B. bedeuten, dass beide Konfigurationen CONFIG, SALCON über die beiden Speicher MEM1, MEM2 verteilt sind, es kann aber ebenso bedeuten, dass einzelne Systemalarme, die hier nicht gezeigt sind, sich in einem anderen Teil des Speichers MEM befinden, je nach deren Priorität und Sicherheitsrelevanz. Ebenfalls zu sehen ist, dass die Schnittstelle INT einerseits mit dem ersten Speicher MEM1 verbunden ist, und andererseits mit der Ausführungseinheit EXE, die wiederum mit dem zweiten Speicher MEM2 verbunden ist.

Diese Anbindung der Schnittstelle INT ermöglicht es, beispielsweise über die Schnittstelle INT, Teile der Konfigurationen CONFIG, SALCON direkt in den ersten Speicher MEM1 zu schreiben und wiederum weitere Teile der Konfiguration CONFIG, SALCON nach einer Verarbeitung durch die Ausführungseinheit EXE in den zweiten Speicher MEM2 zu schreiben. Auch hier gilt wieder, dass der Speicher MEM als ein ganzer Speicher mit zwei logischen Blöcken, MEM1, MEM2, unterteilt sein kann, oder eben, wie eingangs bereits erwähnt, dass es sich um verschiedene physikalische Speicherarten handelt.

FIG 4 zeigt eine einfache Ausführungsform eines Bedien- und/ oder Beobachtungsgeräts HMI, das zumindest zur Änderung der Systemalarmkonfiguration SALCON keine Ausführungseinheit aufweist. In FIG 4 ist die Schnittstelle INT direkt mit dem Speicher MEM verbunden, wobei im Speicher MEM die Systemalarmkonfiguration SALCON gespeichert ist. Diese Ausführungsform könnte beispielsweise interessant sein, wenn alle Konfigurationen CONFIG, SALCON zentral durchzuführen sind und beispielsweise von einem hier nicht gezeigten übergeordneten Konfigurationssystem CONSYS direkt in das Bedien- und/oder Beobachtungsgerät HMI bzw. dessen Speicher MEM geschrieben werden.

In FIG 4 ist ebenso denkbar, dass die Schnittstelle derart ausgebildet ist, dass die Systemalarmkonfiguration SALCON direkt aus einer Cloud oder von jeglichen weiteren Netzwerk- bzw. Internetrechnern bezogen werden kann.

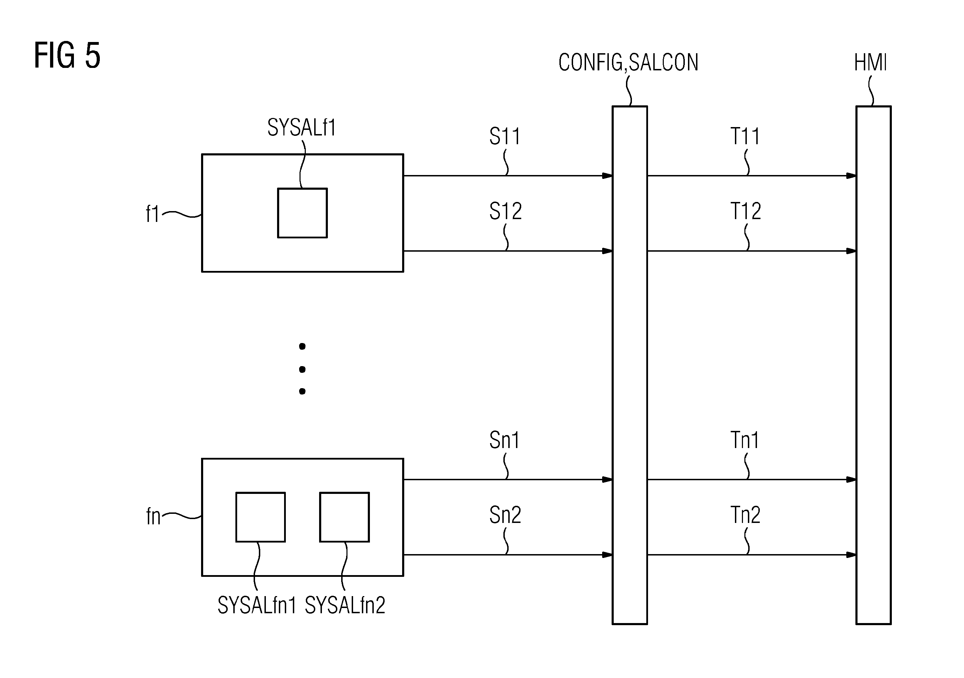

FIG 5 zeigt ein mögliches Schema des Verfahrens zur Verwaltung von Systemalarmen. Auf der linken Seite ist zu sehen, dass Funktionen f1, fn jeweils Systemalarme SYSALf1, SYSALfn1, SYSALfn2 aufweisen. Die Funktion fn weist dabei zwei Systemalarme SYSALfn1, SYSALfn2 auf. Dies soll andeuten, dass jede Funktion f1, ..., fn beliebig viele Systemalarme SYSALf1, SYSALfn1, SYSALfn2 aufweisen kann, dies aber nicht zwangsläufig notwendig ist. Weiterhin zu sehen sind die Benutzeraktionen S11, ..., Sn2, die in die Konfigurationen CONFIG, SALCON des Bedien- und/oder Beobachtungsgeräts HMI eingreifen. Über die Systemreaktionen T11, ..., Tn2 wirken sich die Benutzeraktionen S11, ..., Sn2 im Bedien- und/oder Beobachtungsgerät HMI aus. So sind in FIG 5 folgende Schritte denkbar:

Benutzeraktion S11: Der Benutzer bringt die Funktion f1 in die Konfiguration CONFIG, SALCON sein. Daraufhin werden als Systemreaktion T11 die Systemalarme SYSAL der Funktion f1 auf dem Bedien- und/oder Beobachtungsgerät angelegt. Die Funktion f1 könnte dabei beispielsweise "Treiberkommunikation" zur Kommunikation direkt mit dem Bedien- und/oder Beobachtungsgerät HMI sein. Dies könnte beispielsweise durch Einfügen einer Verbindung zwischen dem Bedien- und/oder Beobachtungsgerät HMI und einer speicherprogrammierbaren Steuerung und/oder einem übergeordneten System. Entstehende Fehler können dabei beispielsweise "Verbindung zum Bedien- und/oder Beobachtungsgerät HMI getrennt" sein. Wird nun die Funktion "Treiberkommunikation" nicht mehr benötigt, die Verbindung zum HMI wurde aber bereits getrennt, so steht der Fehler "Verbindung zum Bedien- und/oder Beobachtungsgerät HMI getrennt" an. Wird nun die Konfiguration entsprechend geändert, so kann der Fehler "Verbindung zum HMI getrennt" gelöscht werden, da die Funktionalität "Treiberkommunikation" nicht mehr benötigt wird. So wird der Alarmpuffer, der zur Speicherung der anstehenden Alarme vorgesehen sein kann, nicht unnötig mit irrelevanten Alarmen belastet.

Benutzeraktion S12: Wird nun durch den Benutzer oder auch durch ein übergeordnetes System die Funktion f1, beispielsweise weil diese nicht mehr benötigt wird, aus der Konfiguration CONFIG gelöscht, so werden durch die Systemreaktion T12 auch die Systemalarme der Funktion f1 komplett von dem Bedien- und/oder Beobachtungsgerät HMI gelöscht. Beispielhaft ist dafür das Löschen der letzten Verbindung zwischen dem Bedien- und/oder Beobachtungsgerät HMI und einer speicherprogrammierbaren Steuerung und/oder einem übergeordneten System. Es besteht hierbei die Möglichkeit, einzelne Systemalarme SYSALf1 zu definieren, die trotz dieses Löschbefehls weiterhin auf dem Bedien- und/oder Beobachtungsgerät HMI verbleiben. Dies kann beispielsweise aus Sicherheitsgründen geschehen.

Benutzeraktion Sn1: Der Benutzer bringt ein erstes Archiv der Funktion fn in die Konfiguration CONFIG, SALCON sein. Hierbei kann es sich beispielsweise um eine Archivierungsfunktion handeln. Daraufhin werden als Systemreaktion Tn1 die Systemalarme SYSALfn1, SYSALfn2 der Funktion fn auf dem Bedien- und/oder Beobachtungsgerät angelegt.

Benutzeraktion Sn2: Wird nun durch den Benutzer oder auch durch ein übergeordnetes System das letzte Archiv der Funktion fn aus der Konfiguration CONFIG gelöscht, so werden durch die Systemreaktion Tn2 auch die Systemalarme der Funktion fn komplett vom Bedien- und/oder Beobachtungsgerät HMI gelöscht. Es besteht hierbei die Möglichkeit, einzelne Systemalarme SYSALfn1, SYSALfn2 zu definieren, die trotz dieses Löschbefehls weiterhin auf dem Bedien- und/oder Beobachtungsgerät HMI verbleiben. Dies kann beispielsweise aus Sicherheitsgründen geschehen.

Zusammenfassend betrifft die Erfindung ein Verfahren, das es ermöglicht Systemalarme SYSALf1, ... SYSALfn effizient und ressourcenschonend auf einem Bedien- und/oder Beobachtungsgerät HMI, zu verwalten und zur Verfügung zu stellen. Das Bedien- und/oder Beobachtungsgerät HMI weist dazu eine Konfiguration CONFIG, die zumindest auf dem Bedien- und/oder Beobachtungsgerät HMI aktive Funktionen f1, ..., fn umfasst und eine Systemalarmkonfiguration SALCON, die die auf dem Bedien- und/ oder Beobachtungsgerät HMI zur Verfügung stehenden Systemalarme SYSALf1, ... SYSALfn umfasst, auf. Es wird ein Verfahren vorgeschlagen,
umfassend die Schritte:
- Ermitteln der Konfiguration CONFIG des Bedien- und/oder Beobachtungsgeräts HMI,
- Prüfen ob sich die Konfiguration CONFIG des Bedien- und/oder Beobachtungsgeräts HMI geändert hat und
- Anpassen der Systemalarmkonfiguration SALCON des Bedien- und/oder Beobachtungsgeräts HMI, wenn sich die aktiven Funktionen f1, ..., fn in der Konfiguration CONFIG des Bedien- und/oder Beobachtungsgeräts HMI geändert haben.

## Patentansprüche

1. Verfahren zur Verwaltung von Systemalarmen (SYSALf1, ... SYSALfn) auf einem Bedien- und/oder Beobachtungsgerät (HMI), wobei das Bedien- und/oder Beobachtungsgerät (HMI) aufweist:
- eine Konfiguration (CONFIG), die zumindest auf dem Bedien- und/oder Beobachtungsgerät (HMI) aktive Funktionen (f1, ..., fn) umfasst und
- eine Systemalarmkonfiguration (SALCON), die die auf dem Bedien- und/oder Beobachtungsgerät (HMI) zur Verfügung stehenden Systemalarme (SYSALf1, ... SYSALfn) umfasst,
**umfassend die Schritte:**
- Ermitteln der Konfiguration (CONFIG) des Bedien- und/oder Beobachtungsgeräts (HMI),
- Prüfen ob sich die Konfiguration (CONFIG) des Bedien- und/oder Beobachtungsgeräts (HMI) geändert hat und
- Anpassen der Systemalarmkonfiguration (SALCON) des Bedien- und/oder Beobachtungsgeräts (HMI), wenn sich die aktiven Funktionen (f1, ..., fn) in der Konfiguration (CONFIG) des Bedien- und/oder Beobachtungsgeräts (HMI) geändert haben.

2. Verfahren nach Anspruch 1, wobei ein übergeordnetes Konfigurationssystem (CONSYS) eine Anpassung der Systemalarme (SYSALf1, ... SYSALfn) des Bedien- und/oder Beobachtungsgerät (HMI) bewirkt.

3. Verfahren nach einem der vorhergehenden Ansprüche, wobei ein übergeordnetes Konfigurationssystem (CONSYS) zur Anpassung der Systemalarmkonfiguration (SALCON) des Bedien- und/ oder Beobachtungsgerät (HMI) ein Deltapaket an das Bedien- und/oder Beobachtungsgerät (HMI) sendet.

4. Verfahren nach Anspruch 3, wobei das Bedien- und/oder Beobachtungsgerät (HMI) mittels des Deltapakets seine eigene Systemalarmkonfiguration (SALCON) anpasst.

5. Verfahren nach einem der vorhergehenden Ansprüche, wobei im Bedien- und/oder Beobachtungsgerät (HMI) anstehende Systemalarme (SYSALf1, ... SYSALfn) gelöscht werden, deren korrespondierende Funktionen (f1, ..., fn) kein Teil der Systemalarmkonfiguration (SALCON) mehr sind.

6. Verfahren nach einem der vorhergehenden Ansprüche, wobei für Bedien- und/oder Beobachtungsgeräte (HMI) Systemalarme (SYSALf1, ... SYSALfn) definiert werden können, die resistent gegenüber Löschbefehlen sind.

7. Verfahren nach einem der vorhergehenden Ansprüche, wobei das Bedien- und/oder Beobachtungsgerät (HMI) selbsttätig die Systemalarme (SYSALf1, ... SYSALfn) anhand seiner Funktionalitäten (f1, f2, ..., fn) anpasst.

8. Bedien- und/oder Beobachtungsgerät (HMI) zur Durchführung eines Verfahrens nach einem der vorhergehenden Ansprüche, aufweisend mindestens einen Speicher (MEM) zur Speicherung einer Konfiguration (CONFIG) und einer Systemalarmkonfiguration (SALCON) und eine Schnittstelle (INT), wobei die Konfiguration (CONFIG) zumindest auf dem Bedien- und/oder Beobachtungsgerät (HMI) aktive Funktionen (f1, ..., fn) umfasst, wobei die Systemalarmkonfiguration (SALCON) zumindest auf dem Bedien- und/oder Beobachtungsgerät (HMI) zur Verfügung stehende Systemalarme (SYSALf1, ... SYSALfn) umfasst und wobei die Schnittstelle (INT) zumindest zum Ermitteln, Prüfen und/oder Anpassen der Systemalarmkonfiguration (SALCON) ausgebildet ist.

9. Bedien- und/oder Beobachtungsgerät (HMI) nach Anspruch 8, aufweisend eine Ausführungseinheit (EXE), die zumindest zum Anpassen der Systemalarmkonfiguration (SALCON) ausgebildet ist.

10. Bedien- und/oder Beobachtungsgerät (HMI) nach Anspruch 8 oder 9, wobei die Ausführungseinheit (EXE) zum Abrufen und/ oder Empfangen einer Systemalarmkonfiguration (SALCON) aus einer Cloud (CL) ausgebildet ist.

11. Übergeordnetes Konfigurationssystem (CONSYS), ausgebildet zur Durchführung eines Verfahrens nach einem der vorhergehenden Ansprüche, aufweisend mindestens eine Schnittstelle (INT) zur Kommunikation mit einem Bedien- und/oder Beobachtungsgerät (HMI), sowie einen Speicher (MEM) zum zumindest temporären Speichern von Funktionen (f1, ... fn) und Systemalarmen (SYSALf1, ... SYSALfn).

12. Übergeordnetes Konfigurationssystem (CONSYS) nach Anspruch 11, ausgebildet zur Anpassung von Systemalarmen (SYSALf1, ... SYSALfn) eines Bedien- und/oder Beobachtungsgeräts (HMI) über die Schnittstelle (INT).
